(19) Europäisches Patentamt
European Patent Office
Office européen des brevets

(11) Veröffentlichungsnummer: **0 249 860**
B1

(12) # EUROPÄISCHE PATENTSCHRIFT

(45) Veröffentlichungstag der Patentschrift: **26.07.89**

(51) Int. Cl.⁴: **C08G 18/14**, C08G 18/32, C08G 18/76

(21) Anmeldenummer: **87108344.0**

(22) Anmeldetag: **10.06.87**

(54) **Polyurethan(harnstoff)-Schaumstoffe und ein Verfahren zu ihrer Herstellung.**

(30) Priorität: **19.06.86 DE 3620504**

(43) Veröffentlichungstag der Anmeldung:
**23.12.87 Patentblatt 87/52**

(45) Bekanntmachung des Hinweises auf die Patenterteilung:
**26.07.89 Patentblatt 89/30**

(84) Benannte Vertragsstaaten:
**BE DE ES FR GB IT NL SE**

(56) Entgegenhaltungen:
**EP-A- 0 128 636**
**DE-A- 2 103 730**
**DE-A- 2 259 955**

**Die Akte enthält technische Angaben, die nach dem Eingang der Anmeldung eingereicht wurden und die nicht in dieser Patentschrift enthalten sind.**

(73) Patentinhaber: **BAYER AG,**
**D-5090 Leverkusen 1 Bayerwerk(DE)**

(72) Erfinder: **Haas, Peter, Dr., Zwengenberger Strasse 43, D-5657 Haan 1(DE)**
Erfinder: **Kogelnik, Hans-Joachim, Dr., Roggendorfstrasse 61, D-5000 Köln 80(DE)**

EP 0 249 860 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft die Herstellung von Polyurethan(harnstoff)-Schaumstoffen, bei der di- und höherfunktionelle Amin-Vernetzer, insbesondere die Verbindungen

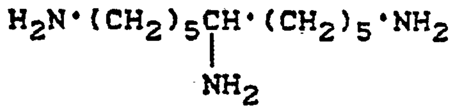

und/oder

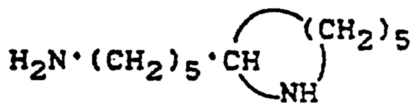

in Mengen von 0,01 bis 5 Gew.-Teilen pro 100 Gew.-Teile höhermolekulares Polyol unter günstigen arbeitshygienischen Bedingungen mitverwendet werden. Diese Amin-Vernetzer zeigen zellöffnende Wirkung und ergeben schrumpfarme Schaumstoffe, vor allem (Kalt-)Fomrschaumstoffe mit verbesserten mechanischen Eigenschaften.

Die Erfindung betrifft ferner Polyurethan(harnstoff)-Schaumstoffe, welche die erfindungsgemäßen Amin-Vernetzer eingebaut enthalten.

Zur Herstellung von Polyurethan(harnstoff)-Schaumstoffen auf Polyisocyanatbasis werden bislang schon bestimmte Amine anteilweise als Vernetzer eingesetzt. Hierbei handelt es sich in der Regel um höherfunktionelle Polyalkylenpolyamine wie Deithylentriamin, Triethylentetramin, Tetraethylenpentamin, Pentaethylenhexamin oder deren Gemische. Verbindungen dieses Typs werden in der DE-B 2 102 730 ausführlich beschrieben. Mit diesen Polyalkylen-Polyaminen konnte bereits ein hoher Stand der Polyurethan-Schaumstoffherstellung erreicht werden. Gleichwohl ist die technische Polyurethan(harnstoff)-Schaumstoffherstellung noch verbesserungsbedürftig. Hierunter sind zu verbessernde mechanische Eigenschaften der Schaumstoffe wie Stauchhärte, Bruchdehnung und Zugfestigkeit sowie der Druckverformungsrest, jedoch heute auch verstärkt Aspekte der Arbeitshygiene bei der Schaumstoffherstellung, zu verstehen.

Bei der Fertigung von Polyurethan(harnstoff)-Schaumstoff-Formteilen mit den beschriebenen Polyalkylenpolyaminen, bei denen es sich in der Regel um Destillationsschnitte dieser oligomeren Produkte handelt, treten Geruchsbelästigungen auf, die von der verarbeitenden Industrie immer stärker beanstandet werden.

Es war daher Aufgabe der Erfindung, mechanisch hochwertige und arbeitshygienisch einwandfrei herzustellende Polyurethan(harnstoff)-Schaumstoffe unter Beachtung folgender Schwerpunkte zu entwickeln:

- Verbesserung der Reaktivität der Amin-Vernetzer
- Verbesserung des Ausdünstungsverhaltens der Polymermatrix
- Erhöhung der Stauchhärte
- Verbesserung der Bruchdehnung
- Verbesserung der Zugfestigkeit
- Senkung des Druckverformungsrestes.

Überraschend sind hierzu die mit den Polyalkylenpolyaminen strukturell nicht verwandten, di-, tri- und höherfunktionellen Amine oder Amingemische der allgemeinen Formel (I) und/oder (II) hervorragend geeignet.

Dies ist um so überraschender, als bifunktionelle Amine an sich den Aufbau einer Zellstruktur dahingehend stören können, daß bei ihrer Anwesenheit ein Schaumkollaps resultiert, da die sich bildenden, instabilen Zellstrukturen durch frühzeitiges Öffnen völlig zusammenbrechen.

Die Wirkung der erfindungsgemäß zu verwendenden di- und/oder höherfunktionellen Amin-Vernetzer war nicht vorhersehbar. Neben hervorragenden mechanischen Eigenschaften, wie die erhebliche Verbesserung der Werte von Stauchhärte, Bruchdehnung und Zugfestigkeit, sind die unmittelbar nach der Reaktion entformten Formteile insbesondere nahezu geruchsfrei. Insgesamt stellen diese Eigenschaften einen wesentlichen technischen Fortschritt dar.

Als Beispiele für die erfindungsgemäß zu verwendenden, mehrfunktionellen Amin-Vernetzer seien angeführt:

I) Offenkettige Amine

1) $H_2N-(CH_2)_5-CH-(CH_2)_5-NH_2$
|
$NH_2$

2) $H_2N-(CH_2)_6-CH-(CH_2)_5-NH_2$
|
$NH_2$

3) $H_2N-(CH_2)_7-CH-(CH_2)_5-NH_2$
|
$NH_2$

4) $H_2N-(CH_2)_5-CH-(CH_2)_4-NH_2$
|
$NH_2$

5) $H_2N-(CH_2)_5-CH-(CH_2)_5-NH_2$
|
OH

6) $H_2N-(CH_2)_6-CH-(CH_2)_4-NH_2$
|
OH

7) $H_2N-(CH_2)_5-CH-(CH_2)_5-NH_2$
|
$(CH_2)_5$
|
$NH_2$

8. 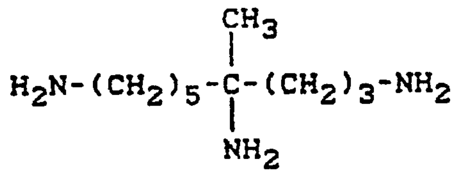

9) 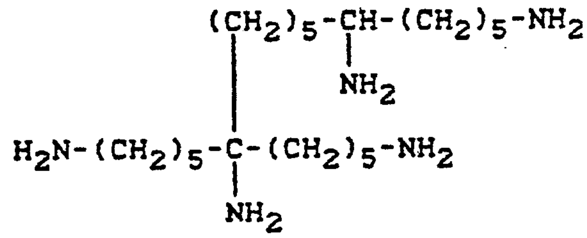

II) cyclische Amine:

10) 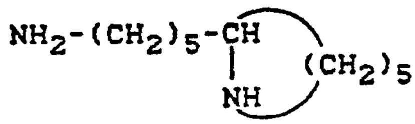

11) 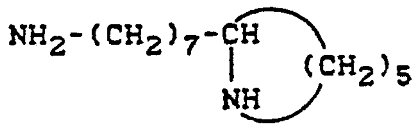

12) 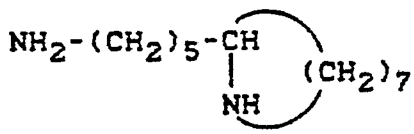

13) 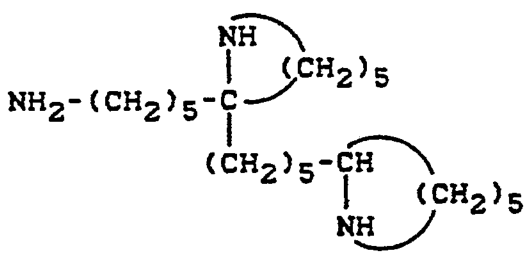

14) 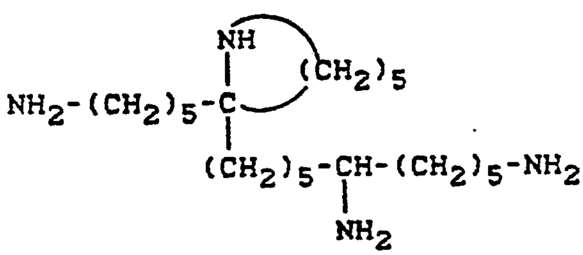

Bei diesen Aminen handelt es sich um dünnflüssige Polyamine, die nahezu geruchsfrei sind. Ihr großer Vorteil bei der Polyurethan(harnstoff)-Schaumstoff-Herstellung liegt neben wesentlich verbesserten mechanischen Eigenschaften in fast geruchsfreien Formteilen, was auch für unmittelbar nach der Entformung für noch reaktionsbedingt warme Formkörper gilt. Dies ist arbeitshygienisch von enormer bedeutung.

Ein weiterer wichtiger Vorteil dieser Amintypen liegt in ihrer Fähigkeit, sowohl die Polyurethanbildungsreaktion zu aktivieren als auch den Aufbau des Zellgefüges zu beeinflussen. Diese Amine wirken nämlich auch zellöffnend, so daß auf zusätzliche Zellöffner verzichtet werden kann.

Bevorzugt sind die Verbindungen 1 und 10, sowie gegebenenfalls die Nebenprodukte ihrer Herstellung 9, 13 und 14, welche gegebenenfalls im Gemisch oder in Abmischung mit 1 und/oder 10 vorliegen können.

**Gegenstand der Erfindung ist ein Verfahren zur Herstellung von Polurethan(harnstoff)-Schaumstoffen durch Umsetzung von Polyisocyanaten mit organischen Verbindungen vom Molekulargewicht 400** bis 10.000, welche mindestens zwei gegenüber Isocyanaten reaktionsfähige Wasserstoffatome enthalten, und mit Amin-Vernetzern in Gegenwart von Wasser und/oder organischen Treibmitteln, gegebenenfalls unter Mitverwendung von Katalysatoren, weiteren Hilfs- und Zusatzstoffen und weiteren Kettenverlängerungsmitteln vom Molekulargewicht 32 bis 399, das dadurch gekennzeichnet ist, daß als Amin-Vernetzer di- oder höherfunktionelle Amine der allgemeinen Formeln (I) und/oder (II)

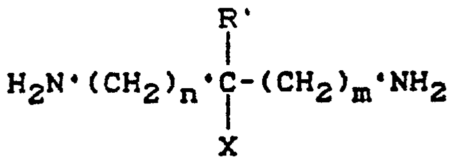

(I)

II) cyclische Amine:

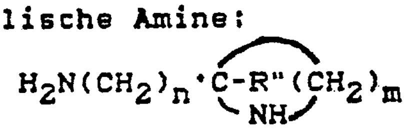

(II),

wobei

n und m jeweils unabhängig voneinander ganze Zahlen von 2 bis 10, bevorzugt 3 bis 8, insbesondere 5,

X $-OH$, $-NH_2$ oder $-(CH_2)_m \cdot NH_2$

R' -H, $-C_1-C_5$-Alkyl (bevorzugt Methyl)

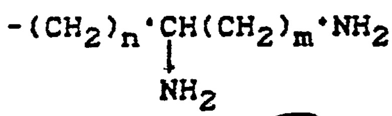

R" -H,

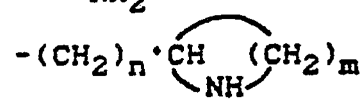

oder

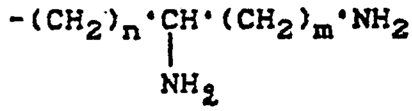

bedeutet, in Mengen von 0.01 bis 5,0 Gew.-Teilen, bevorzugt 0,05 bis 0,6 Gew.-Teilen, bezogen auf 100 Gew.-Teile der Verbindungen vom Molekulargewicht 400-10 000, verwendet werden.

Bevorzugt ist erfindungsgemäß ein Verfahren, das dadurch gekennzeichnet, daß in den allgemeinen Formeln

R′ und R″ gleich Wasserstoff
X gleich $NH_2$ oder OH, vorzugsweise $NH_2$
n, m jeweils gleiche oder verschiedene Zahlen von 3 bis 8, besonders bevorzugt von 4 bis 6 und insbesondere gleich 5

bedeuten.

Bevorzugt ist ein Verfahren,bei dem als Polyisocyanate solche verwendet werden, die durch Anilin-Formaldehyd-Kondensation und nachfolgende Phsogenierung hergestellt worden sind oder bei dem als Polyisocyantate Gemische aus

a) phosgenierten Anilin-Formaldehyd-Kondensaten und
b) Isomerengemischen der 2,4- und 2,6-Toluylendiisocyanate oder bei dem als Polyisocyanate Isomerengemische aus 2,4- und 2,6-Toluylendiisocyanat verwendet werden.

Als Amin-Vernetzer sind die Verbindungen

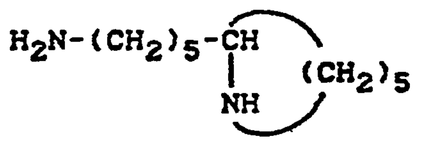

,

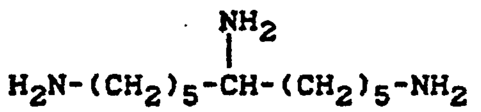

,

und

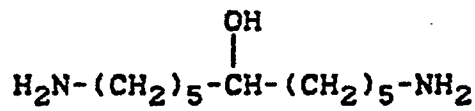

erfindungsgemäß bevorzugt.

Die erfindungsgemäße Schaumstoffherstellung wird vorzugsweise in Abwesenheit von üblichen Zellöffnern durchgeführt.

Weiterer Erfindungsgegenstand sind überwiegend offenzellige Polyurethan(harnstoff)-Schaumstoffe, erhältlich nach dem erfindungsgemäßen Verfahren.

Für die Durchführung des erfindungsgemäßen Verfahrens zur Herstellung der Polyurethan(harnstoff)-Schaumstoffe, vorzugsweise Schaumstoff-Formkörper, werden neben den obengenannten Amin-Vernetzern als Ausgangskomponenten eingesetzt:

Aliphatische, cycloaliphatische,araliphatische, aromatische und heterocyclische Di-und/oder Polyisocyanate, wie sie z.B. von W. Siefken in Justus Liebigs Annalen der Chemie, 562, Seiten 75 bis 136, beschrieben werden, beispielsweise solche der Formel Q $(NCO)_n$, in der n = 2 bis 4, vorzugsweise 2, und Q einen aliphatischen Kohlenwasserstoffrest mit 2 bis 18, vorzugsweise 6 bis 10 C-Atomen, einen cycloaliphatischen Kohlenwasserstoffrest mit 4 bis 15, vorzugsweise 5 bis 10 C-Atomen, einen aromatischen Kohlenwasserstoffrest mit 6 bis 15, vorzugsweise 6 bis 13 C-Atomen, oder einen araliphatischen Kohlenwasserstoffrest mit 8 bis 15, vorzugsweise 8 bis 13 C-Atomen, bedeuten, z.B. Ethylendiisocyanat, 1,4-Tetramethylendiisocyanat, 1,6-Hexamethylendiisocyanat, 1,12-Dodecandiisocyanat, Cyclo butan-1,3-diisocyanat, Cyclohexan-1,3- und -1,4-diisocyanat sowie beliebige Gemische dieser Isomeren, 1-Isocyanato-3,3,5-trimethyl-5-isocyanatomethyl-cyclohexan (DEB 1 202 785, US-A 3 401 190), 2,4- und 2,6-Hexahydrotoluylendiisocyanat sowie beliebige Gemische dieser Isomeren, Hexahydro-1,3-und/oder -1,4-phenylendiisocyanat, Perhydro-2,4′-und/oder -4,4′-diphenylmethan-diisocyanat, 1,3- und 1,4-Phenylendiisocyanat, 2,4- und 2,6-Toluylendiisocyanat sowie beliebige Gemische dieser Isomeren, Diphenylmethan-4,4′- und/oder 2,2′ und/oder -2,4′-diisocyanat oder beliebige Isomerengemeische, Naphthylen-1,5-diisocyanat.

Ferner kommen beispielsweise erfindungsgemäß infrage: Triphenylmethan-4,4′ ,4″-triisocyanat, Polyphenyl-polymethylenpolyisocyanate, wie sie durch Anilin-Formaldehyd-Kondensation und anschließende Phosgenierung erhalten und z.B. in den GB-B 874 430 und 848 671 beschrieben werden, m- und p-Isocyanatophenylsulfonly-isocyanate gemäß der US-A 3 454 606, perchlorierte Arylpolyisocyanate, wie sie z.B. in der DE-B 1 157 601 (US-A 3 277 138) beschrieben erden, Carbodiimidgruppen aufweisende Polyisocyanate, wie sie z.B. in der DE-C 1 092 007 (US-A 3 152 162) sowie in den DE-A 2 504 400, 2 537 685 und 2 552 350 beschrieben werden, Norbornan-Diisocyanate, Allophanatgruppen aufweisende Polyisocyanate, wie sie z.B. in der GB-B 994 890, der BE-A 761 626 und der NL-A 102 524 beschrieben werden, Isocyanuratgruppen aufweisende Polyisocyanate, wie sie z.B. in der US-A 3 001 973, in den DE-C 1 022 789, 1 222 067 und 1 027 394 sowie in den DE-A 1 929 034 und 2 004 048 beschrieben werden, Urethangruppen aufweisende Polyisocyanate, wie sie z.B. in der BE-A 752 261 oder in den US-A 3 394 164 und 3 644 457 beschrieben werden, acylierte Harnstoffgruppen aufweisende Polyisocyanate gemäß der DE-E 1 230 778, Biuretgruppen aufweisende Polyisocyanate, wie sie z.B. in den US-A 3 124 605, 3 201 372 und 3 124 605 sowie in der GB-B 889 050 beschrieben werden, durch Telomerisationsreaktionen hergestellte Polyisocyanate, wie sie z.B. in der US-A 3 654 106 beschrieben werden, Estergruppen aufweisende Polyisocyanate, wie sie z.B. in den GB-B 965 474 und 1 072 956, in der US-A 3 567 763 und in der DE-C 1 231 688 genannt werden, Umsetzungsprodukte der obengenannten Isocyanate mit Acetalen gemäß der DE-C 1 072 385 und polymere Fettsäureester enthaltende Polyisocyanate gemäß der US-A 3 455 883.

Besonders bevorzugt werden in der Regel die technisch leicht zugänglichen Polisocyanate, z.B. das 2,4- und 2,6-Toluylendiisocyanat sowie beliebige Gemische dieser Isomeren ("TDI"), Polyphenyl-polymethylen-polyisocyanate, wie sie durch Anilin-Formaldehyd-Kondensation und anschließende Phosgenierung hergestellt werden ("rohes MDI") und modifizierte Carbodiimidgruppen, Urethangruppen, Allophanatgruppen, Isocyanuratgruppen, Harnstoffgruppen oder Biuretgruppen aufweisende Polyisocyanate, insbesondere solche modifizierten Polyisocyanate, die sich von 2,4- und/oder 2,6-Toluylendiisocyanaten bzw. von 4,4'- und/oder 2,4'-und/oder 2,2'-Diphenylmethandiisocyanaten bzw. ihren Isomerengemischen ableiten.

Ausgangskomponenten sind ferner Verbindungen mit mindestens zwei, gegenüber Isocyanaten reaktionsfähigen Wasserstoffatomen, von einem Molekulargewicht in der Regel von 400 bis 10.000. Hierunter versteht man neben Aminogruppe, Thiolgruppen oder Carboxylgruppen aufweisenden Verbindungen vorzugsweise Hydroxylgruppen aufweisende Verbindungen, insbesondere zwei bis acht Hydroxylgruppen aufweisende Verbindungen, speziell solche vom Molekulargewicht 1.000 bis 8.000, vorzugsweise 1.500 bis 4.000, z.B. mindestens zwei, in der Regel 2 bis 8, vorzugsweise aber 2 bis 4, Hydroxylgruppen aufweisende Polyester, Polyether, Polythioether, Polyacetale, Polycarbonate und Polyesteramide, wie sie für die Herstellung von homogenen und von zellförmigen Polyurethanen an sich bekannt sind:

Die infrage kommenden Hydroxylgruppen aufweisenden Polyester sind z.B. Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester vewendet werden. Die Polycarbonsäuren können aliphatischer, cycloaliphatischer, aromatischer und/oder heterocyclischer Natur sein und gegebenenfalls, z.B. durch Halogenatome, substituiert und/oder ungesättigt sein.

Als Beispiele für solche Carbonsäuren und deren Derivate seien ganannt: Bernsteinsäure, Adipinsäure, Korksäure, Azelainsäure, Sebacinsäure, Phthalsäure, Isophthalsäure, Trimellitsäure, Phthalsäureanhydrid, Tetrahydropthalsäureanhydrid, Hexahydropthalsäureanhydrid, Tetrachlorphtahlsäureanhydrid, Endomethylentetrahydrophthalsäureanhydrid, Glutarsäureanhydrid, Maleinsäure, Maleinsäureanhydrid, Fumarsäure, dimerisierte und trimerisierte ungesättigte Fettsäuren, gegebenenfalls in Mischung mit monomeren ungesättigten Fettsäuren, wie Ölsäure; Terephthalsäuredimethylester und Terephthalsäure-bis-glykolester.

Als mehrwertige Alkohole kommen z.B. Ethylenglykol, Propan-diol-(1,2) und -(1,3), Butandiol-(1,4) und -(2,3), Hexandiol-(1,6), Octandiol-(1,8), Neopentylglykol, 1,4-Bis-hydroxymethylcyclohexan, 2-Methyl-1,3-propandiol, Glycerin, Trimethylolpropan, Hexantriol-(1,2,6), Butantriol-(1,2,4), Trimethylolethan, Pentaerythrit, Chinit, Mannit und Sorbit, Formit, 1,4,3,6-Dianhydrosorbit, Methylglykosid, ferner Diethylenglykol, Triethylenglykol, Tetraethylenglykol und höhere Polyethylenglykole, Dipropylenglykol und höhere Polypropylenglykole sowie Dibutylenglykol und höhere Polybutylenglykole infrage. Die Polyester können anteilig endständige Carboxylgruppen aufweisen. Auch Polyester aus Lactonen, z.B. ε-Caprolacton, oder aus Hydroxycarbonsäuren, z.B. ω-Hydroxycapronsäure, sind einsetzbar.

Auch die infrage kommenden, mindestens zwei, in der Regel zwei bis acht, vorzugsweise zwei bis drei, Hydroxylgruppen aufweisenden Polyether sind solche der an sich bekannten Art und werden z.B. durch Polymerisation von Epoxiden wie Ethylenoxid, Propylenoxid, Butylenoxid, Styroloxid oder Epichlorhydrin oder von Tetrahydrofuran, mit sich selbst, z.B. in Gegenwart von Lewis-Katalysatoren wie $BF_3$, oder durch Anlagerung dieser Epoxide, vorzugsweise von Ethylenoxid und Propylenoxid, gegebenenfalls im Gemisch oder nacheinander, an Startkomponenten mit reaktionsfähigen Wasserstoffatomen wie Wasser, Alkohole, Ammoniak oder Amine, z.B. Ethylenglykol, Propandiol-(1,3) oder -(1,2), Trimethylolpropan, Glycerin, Sorbit, 4,4'-Dihydroxydiphenylpropan, Anilin, Ethanolamin oder Ethylendiamin, hergestellt. Auch Sucrosepolyether, wie sie z.B. in den DE-B 1 176 358 und 1 064 938 beschrieben werden, sowie auf Formit oder Formose gestartete Polyether (DE-A 2 639 083), kommen erfindungsgemäß infrage. Vielfach sind solche Polyether bevorzugt, die überwiegend (bis zu 90 Gew.%, bezogen auf alle vorhandenen OH-Gruppen im Polyether) primäre OH-Gruppen aufweisen. Auch OH-Gruppen aufweisende Polybutadiene sind erfindungsgemäß geeignet.

Unter den Polythioethern seien insbesondere die Kondensationsprodukte von Thiodiglykol mit sich selbst und/oder mit anderen Glykolen, Dicarbonsäuren, Formaldehyd, Aminocarbonsäuren oder Aminoalkoholen angeführt.

Als Polyacetale kommen z.B. die aus Glykolen, wie Diethylenglykol, Triethylenglykol, 4,4'-Dioxethoxydiphenyldimethylmethan, Hexandiol und Formaldehyd herstellbaren Verbindungen infrage. Auch durch Polymerisation cyclischer Acetale wie z.B. Trioxan lassen sich erfindungsgemäß geeignete Polyacetale herstellen.

Als Hydroxylgruppen aufweisende Polycarbonate kommen solche der an sich bekannten Art in Betracht, die z.B. durch Umsetzung von Diolen wie Propandiol-(1,3), Butandiol-(1,4) und/oder Hexandiol-(1,6), Diethylenglykol, Triethylenglykol, Tetraethylenglykol oder Thiodiglykol mit Diarylcarbonaten, z.B. Diphenylcarbonat, oder Phosgen hergestellt werden können.

Zu den Polyesteramiden und Polyamiden zählen z.B. die aus mehrwertigen gesättigten oder ungesättigten Carbonsäuren bzw. deren Anhydriden und mehrwertigen gesättigten oder ungesättigten Aminoalkoholen, Diaminen, Polyaminen und deren Mischungen gewonnenen, vorwiegend linearen Kondensate.

Auch bereits Urethan- oder Harnstoffgruppen enthaltende Polyhydroxylverbindungen sowie gegebenenfalls modifizierte natürlich Polyole, wie Rizinusöl oder Kohlenhydrate, z.B. Stärke, sind verwendbar. Auch Anlagerungsprodukte von Alkylenoxiden an Phenol-Formaldehyd-Harze oder auch an Harnstoff-Formaldehydharze sind erfindungsgemäß einsetzbar.

Die genannten Polyhydroxyverbindungen können vor ihrer Verwendung im Polyisocyanat-Polyadditionsverfahren noch in der verschiedensten Weise modifiziert werden: so läßt sich gemäß DE-A 2 210 839 (US-A 3 849 515 und 2 544 195) ein Gemisch aus verschiedenen Polyhydroxylverbindungen (z.B. aus einem Polyether- und einem Polyesterpolyol) durch Veretherung in Gegenwart einer starken Säure zu einem höhermolekularen Polyol kondensieren, welches aus über Etherbrücken verbundenen verschiedenen Segmenten aufgebaut ist. Es ist auch möglich, z.B. gemäß DE-A 2 559 372 in die Polyhydroxylverbindungen Amidgruppen oder gemäß DE-A 2 620 487 durch Umsetzung mit polyfunktionellen Cyansäureestern Triazingruppen einzuführen. Durch Umsetzung eines Polyols mit einer weniger als äquivalenten Menge eines Diisocyanatocarbodiimids und anschließende Reaktion der Carbodiimidgruppe mit einem Amin, Amid, Phosphit oder einer Carbonsäure erhält man Guanidin-, Phosphonoformamidin- bzw. Acylharnstoffgruppen aufweisende Polyhydroxylverbindungen (DE-A 2 714 289, 2 714 292 und 2 714 293). Von besonderem Interesse ist es in manchen Fällen, die höhermolekularen Polyhydroxylverbindungen durch Reaktion mit Isatosäureanhydrid vollständig oder teilwesie in die entsprechenden Anthranilsäureester überzuführen, wie es in den DE-A 2 019 432 und 2 619 840 bzw. den US-A 3 808 250, 3 975 428 und 4 016 143 beschrieben ist. Man erhält auf diese Weise höhermolekulare Verbindungen mit endständigen aromatischen Aminogruppen.

Durch Umsetzung von NCO-Prepolymeren mit Hydroxylgruppen aufweisenden Enaminen, Aldiminen oder Ketiminen und anschließende Hydrolyse erghält man gemäß DE-A 546 536 bzw. US-A 3 865 791 höhermolekulare, endständige Aminogruppen aufweisende Verbindungen. Weitere Herstellungsverfahren für höhermolekulare Verbindungen mit endständigen Aminogruppen oder Hydrazidgruppen werden in der DE-A 1 694 152 (US-A 3 625 871) und DE-B 3 266 392 beschrieben.

Es können gegebenenfalls auch Polyhydroxylverbindungen eingesetzt werden, in welchen hochmolekulare Polyaddukte bzw. Polykondensate oder Polymerisate in feindisperser oder gelöster Form enthalten sind. Derartige Polyhydroxylverbindungen werden z.B. erhalten, wenn man Polyadditionsreaktionen (z.B. Umsetzungen zwischen Polyisocyanaten und aminofunktionellen Verbindungen) bzw. Polykondensationsreaktionen (z.B. zwischen Formaldehyd und Phenolen und/oder Aminen) in situ in den obengenannten, Hydroxylgruppen aufweisenden Verbindungen ablaufen läßt. Derartige Verfahren sind beispielsweise in den DE-B 1 168 075 und 1 260 142, sowie den DE-A 2 324 134, 2 423 984, 2 512 285, 2 513 815, 2 550, 796, 2 550 797, 2 550 833, 2 550 862, 2 633 293 und 2 639 254 beschrieben. Es ist aber auch möglich, gemäß US-A 3 869 413 bzw. DE-A 2 550 860 eine fertige wäßrige Polymerisation mit einer Polykyhydroxylverbindung zu vermischen und anschließend aus dem Gemisch das Wasser zu entfernen.

Auch durch Vinylpolymerisate modifizierte Polyhydroxylverbindungen, wie sie z.B. durch polymerisation von Styrol und Acrylnitril in Gegenwart von Polyethern (US-A 3 383 351, 3 304 273, 3 523 093, 3 110 695; DE-B 1 152 536) oder Polycarbonatpolyolen (DE-C 1 769 795; US-A 3 637 909) erhalten werden, sind für das erfindungsgemäße Verfahren geeignet. Bei Verwendung von Polyetherpolyolen, welche gemäß den DE-A 2 442 101, 2 644 922 und 2 646 141 durch Pfropfpolymerisation mit Vinylphosphonsäureestern sowie gegebenenfalls (Meth)acrylnitril, (Meth)acrylamid oder OH-funktionellen (Meth)acrylsäureestern modifiziert wurden, erhält man Kunststoffe von besonderer Flammwidrigkeit. Polyhydroxylverbindungen, in welche durch radikalische Pfropfpolymerisation mittels ungesättigter Carbonsäuren sowie gegebenenfalls weiterer olefinisch ungesättigter Monomerer Carboxylgruppen eingeführt wurden (DE-A 2 714 291, 2 739 620 und 2 654 746) können mit besonderem Vorteil in Kombination mit mineralischen Füllstoffen eingesetzt werden. Bei der Verwendung von modifizierten Polyhydroxylverbindungen der obengenannten Art als Ausganskomponente im Polyisocyanat-Polyadditionsverfahren entstehen in vielen Fällen Polyurethankunststoffe mit wesentlich verbesserten mechanischen Eigenschaften.

Vertreter der genannten erfindungsgemäß zu verwendenden Verbindungen sind z.B. in High Polymers, Vol. XVI, "Polyurethanes, Chemistry and Technology", verfaßt von Saunders-Frisch, Interscience Publishers, New York, London, Band I, 1962, Seiten 32-42 und Seiten 44-54 und Band II, 1964, Seiten 5-6 und 198-199, sowie im Kunst stoff-Hanbuch, Band VII, Vieweg-Höchtlen, Carl-Hanser-Verlag, München 1966, z.B. auf den Seiten 45-71, beschrieben. Selbstverständlich können Mischungen der obengenannten Verbindungen mit mindestens zwei gegenüber Isocyanaten reaktionsfähigen Wasserstoffatomen mit einem Molekulargewicht von 400 bis 10.000, z.B. Mischungen von Polyethern und Polyestern, eingesetzt werden.

Von besonderem Vorteil ist es dabei in manchen Fällen, niedrigschmelzende und hochschmelzende Polyhydroxylverbindungen miteinander zu kombinieren (DE-A 2 706 297).

Gegebenenfalls verwendet man zusätzlich als weitere Kettenverlängerungsmittel Verbindungen mit mindestens zwei gegenüber Isocyanaten reaktionsfähigen Wasserstoffatomen und einem Molekulargewicht von 32 bis 399. Auch in diesem Fall versteht man hierunter Hydroxylgruppen und/oder Aminogruppen und/oder Thiolgruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweis 2 bis 4,

gegenüber Isocyanaten reaktionsfähige Wasserstoffatome auf.

Auch in diesem Fall könne Mischungen von verschiedenen Verbindungen mit mindestens zwei gegenüber Isocyanaten reaktionsfähigen Wasserstoffatomen mit einem Molekulargewicht von 32 bis 399 verwendet werden.

Als Beispiele für derartige Verbindungen seien genannt: Ethylenglykol, Propandiol-(1,2) und -(1,3), Butandiol(1,4 und -(2,3), Pentandiol-(1,5), Hexandiol-(1,6), Octandiol-(1,8), Neopentylglykol, 1,4-Bis-hydroxymethylcyclohexan, 2-Methyl-1,3-propandiol, Dibrombutendiol, Glyzerin, Trimethylolpropan, Hexantriol-(1,2,6), Trimethylolethan, Pentaerythrit, Chinit, Mannit und Sorbit, Ricinusöl, Diethylenglykol, Triethylenglykol, Tetraethylenglykol, höhere Polyethylenglykole mit einem Molekulargewicht bis 399, Dipropylenglykol, höhere Polypropylenglykole mit einem Molekulargewicht bis 400, Dibutylenglykol, höhere Polybutylenglykole mit einem Molekulargewicht bis 399, 4,4'-Dihydroxy-diphenylpropan, Dihydroxymethyl-hydrochinon, Ethanolamin, Diethanolamin, N-Methyldiethanolamin, Triethanolamin und 3-Aminopropanol.

In untergeordneten Mengen zur Mitverwendung geeignete aliphatische Diamine sind beispielsweise Ethylendiamin, 1,4-Tetramethylendiamin, 1,11-Undecamethylendiamin, 1,12-Dodecamethylendiamin sowie deren Gemische, 1-Amino-3,3,5-trimethyl-5-aminomethylcyclohexan ("Isophorondiamin"), 2,4- und 2,6-Hexahydrotoluylendiamin sowie deren Gemische, Perhydro-2,4'- und 4,4'-diaminodiphenylmethan, p-Xylylendiamin, Bis-(3-aminopropyl)-methylamin, Diamino-perhydroanthrazene (DE-A 2 638 731) und cycloaliphatische Triamine gemäß DE-A 2 614 244. Auch Hydrazin und substituierte Hydrazine, z.B. Methylhydrazin, N,N'-Dimethylhydrazin und deren Homologe sowie Säuredihydrazide kommen erfindungsgemäß in Betracht, z.B. Carbodihydrazid, Oxalsäuredihydrazid, die Dihydrazide von Malon säure, Bernsteinsäure, Glutarsäure, Adipinsäure, β-Methyladipinsäure, Sebazinsäure, Hydracrylsäure und Terephthalsäure; Semicarbazide-alkylen-hydrazide wie z.B. β-Semicarbazido-propionsäurehydrazid (DE-B 1 770 591), Semicarbazido-alkylencarbazinester wie z.B. 2-Semicarbazidoethyl-carbazinester (DE-A 1 918 504) oder auch Amino-semicarbazid-Verbindungen wie z.B. β-Aminoethyl-semicarbazidocarbonat (DE-A 1 902 931). Zur Steuerung ihrer Reaktivität können die Aminogruppen ganz oder teilweise durch Aldimin- bzw. Ketimin-Gruppen blockiert sein (US-A 3 734 894; De-A 2 637 115).

Als Beispiele für aromatische Diamine seien Bisanthranilsäureester gemäß den DE-A 2 040 644 und 2 160 590, 3,5- und 2,4-Diaminobenzoesäureester gemäß DE-A 2 025 900, die in den DE-A 1 803 635 (US-A 3 681 290 und 3 736 350), 2 040 650 und 2 160 589 bechriebenen estergruppenhaltigen Diamine, die Ethergruppen aufweisenden Diamine gemäß DE-A 1 770 525 und 3 736 295), gegebenenfalls in 5-Stellung substituierte 2-Halogen-1,3-Phenylendiamine, Diethyl-toluylen-diamine oder ihre Isomerengemische (DETA), 3,3'-Dichlor-4,4'-diaminodiphenylmethan, Toluylendiamine, 2,3'-Dichlor-3,3' ,5,5'-tetraethyl-4,4'-diamino-diphenylmethan, 4,4'-, 2,4'-und/oder 2,2'-Diaminodiphenylmethane, 4,4'Diaminodiphenyldisulfide, Diaminodiphenyldithioether, durch Alkylthiogruppen substituierte aromatische Diamine, Diaminobenzolphosphonsäureester, Sulfonat- oder Carboxylatgruppen enthaltende aromatische Diamine sowie die in der DE-A 2 635 400 aufgeführten hochschmelzenden Diamine genannt. Beispiele für aliphatisch-aromatische Diamine sind die Aminoalkylthioaniline gemäß DE-A 2 734 574.

Als Kettenverlängerungsmittel können auch Verbindungen wie 1-Mercapto-3-aminopropan, gegebenenfalls substituierte Aminosäuren, z. B. Glycin, Alanin, Valin, Serin und Lysin sowie gegebenenfalls substituierte Dicarbonsäuren, beispielsweise Bernsteinsäure, Adipinsäure, Phthalsäure, 4-Hydroxyphthalsäure und 4-Aminophthalsäure verwendet werden.

Ferner können gegenüber Isocyanaten monofunktionelle Verbindungen in Anteilen von 0,01 bis 12 Gew.-%, bezogen auf Polyurethanfeststoff, als sogenannte Kettenabbrecher mitverwendet werden. Derartige monofunktionelle Verbindungen sind z. B. Monoamine wie Butyl- und Dibutylamin, Octylamin, Stearylamin, N-Methylstearylamin, Pyrrolidin, Piperidin und Cyclohexylamin, Monoalkohole wie Butanol, 2-Ethylhexanol, Octanol, Dodecanol, die verschiedenen Amylalkohole, Cyclohexanol, Ethylenglykolmonoethylether.

Als Treibmittel sind geeignet:

Wasser und/oder leicht flüchtige anorganische oder organische Substanzen als Treibmittel. Als organische Treibmittel kommen z. B. Aceton, Ethylacetat, halogensubstituierte Alkane wie Methylenchlorid, Chloroform, Ethylidenchlorid, Vinylidenchlorid, Monofluortrichlormethan, Chlortrifluormethan, Dichloridfluormethan, ferner Butan, Hexan, Heptan oder Diethylether; als anorganische Treibmittel z. B. Luft, $CO_2$ oder $N_2O$, in Frage. Eine Treibwirkung kann auch durch Zusatz von bei Temperaturen über Raumtemperatur unter Abspaltung von Gasen, beispielsweise von Stickstoff, sich zersetzenden Verbindungen, z. B. Azoverbindungen wie Azodicarbonamid oder Azoisobuttersäurenitril, erzielt werden. Weitere Beispiele für Treibmittel sowie Einzelheiten über die Verwendung von Treibmitteln sind im Kunststoff-Handbuch, Band VII, herausgegeben von Vieweg und Höchtlen, Carl-Hanser-Verlag, München 1966, z. B. auf den Seiten 108 und 109, 453 bis 455 und 507 bis 510 beschrieben.

Gegebenenfalls mitzuverwendende Hilfs- und Zusatzmittel sind: Katalysatoren der an sich bekannten Art, z. B. tertiäre Amine, wie Triethylamin, Tributylamin, N-Methyl-morpholin, N-Ethyl-morpholin, N,N,N'N'-Tetramethyl-ethylendiamin, Pentamethyl-diethylentriamin und höhere Homologe (DE-A 2 624 527 und 2 624 528), 1,4-Diazabicyclo-(2,2,2)-octan, N-Methyl-N'-dimethylaminoethylpiperazin, Bis-(dimethylaminoalkyl)-piperazine, N,N-Dimethylbenzylamin, N,N-Dimethylcyclohexylamin, N,N-Diethyl-

benzylamin, Bis-(N,N-diethylaminoethyl)-adipat, N,N,N',N'-Tetramethyl-1,3-butandiamin, N,N-Dimethyl-β-phenylethylamin, 1,2-Dimethylimidazol, 2-Methylimidazol, monocyclische und bicyclische Amidine, Bis-(dialkylamino)alkyl-ether sowie Amidgruppen (vorzugsweise Formamidgruppen) aufweisende tertiäre Amine gemäß den DE-A 2 523 633 und 2 732 292). Als Katalysatoren kommen auch an sich bekannte Mannichbasen aus sekundären Aminen, wie Dimethylamin, und Aldehyden, vorzugsweise Fomaldehyd, oder Ketonen wie Aceton, Methylethylketon oder Cyclohexanon und Phenolen, wie Phenol, Nonylphenol oder Bisphenol, in Frage.

Gegenüber Isocyanatgruppen aktive Wasserstoffatome aufweisende tertiäre Amine als Katalysator sind z.B.: Triethanolamin, Triisopropanolamin, N-Methyldiethanolamin, N-Ethyl-diethanolamin, N,N-Dimethylethanolamin, deren Umsetzungsprodukte mit Alkylenoxiden wie Propylenoxid und/oder Ethylenoxid sowie sekundär-tertiäre Amine gemäß DE-A 2 732 292.

Als Katalysatoren kommen ferner Silaamine mit Kohlenstoff-Silizium-Bindungen, wie sie z.B. in der DE-B 1 229 290 (entsprechend der US-A 3 620 984) beschrieben sind, in Frage, z.B. 2,2,4-Trimethyl-2-silamorpholin und 1,3-Diethylaminomethyl-tetramethyl-disiloxan.

Als Katalysatoren kommen auch stickstoffhaltige Basen wie Tetraalkylammoniumhydroxide, ferner Alkalihydroxide wie Natriumhydroxid, Alkaliphenolate wie Natriumphenolat oder Alkalialkoholate wie Natriummethylat in Betracht. Auch Hexahydrotriazine können als Katalysatoren eingesetzt werden (DE-A 1 769 043). Als Katalysatoren können auch organische Metallverbindungen, insbesondere organische Zinnverbindungen, verwendet werden, Als organische Zinnverbindungen kommen neben schwefelhaltigen Verbindungen wie Di-n-octyl-zinn-mercaptid vorzugsweise Zinn(II)-salze von Carbonsäuren wie Zinn(II)-acetat, Zinn(II)-octoat, Zinn(II)-ethylhexoat und Zinn(II)-laurat und die Zinn(IV)-Verbindungen, z.B. Dibutylzinnoxid, Dibutylzinndichlorid, Dibutylzinndiacetat, Dibutylzinndilaurat, Dibutylzinnmaleat oder Dioctylzinndiacetat in Betracht.

Selbstverständlich können alle obengenannten Katalysatoren als Gemische eingesetzt werden. Von besonderem Interesse sind dabei Kombinationen aus organischen Metallverbindungen und Amidinen, Aminopyridinen oder Hydrazinopyridinen (DE-A 2 434 185, 2 601 082 und 2 603 834).

Weitere Vertreter von erfindungsgemäß zu verwendenden Katalysatoren sowie Einzelheiten über die Wirkungsweise der Katalysatoren sind im Kunststoff-Handbuch, Band VII, herausgegeben von Vieweg und Höchtlen, Carl-Hanser-Verlag, München, 1966, z. B. auf den Seiten 96 bis 102 beschrieben.

Die Katalysatoren werden in der Regel in einer Menge zwischen etwa 0,001 und 10 Gew.-%, bezogen auf die Gesamtmenge an Verbindungen mit mindestens zwei gegenüber Isocyanaten reaktionsfähigen Wasserstoffatomen, eingesetzt.

Gegebenenfalls mitzuverwenden sind ferner oberflächenaktive Zusatzstoffe, wie Emulgatoren und Schaumstabilisatoren. Als Emulgatoren kommen z. B. die Natriumsalze von Ricinusöl-sulfonaten oder Salze von Fettsäuren mit Aminen wie ölsaures Diethylamin oder stearinsaures Diethanolamin in Frage. Auch Alkali- oder Ammoniumsalze von Sulfonsäuren wie etwa von Dodecylbenzolsulfonsäure oder Dinaphthylmethandisulfonsäure oder von Fettsäuren wie Ricinolsäure oder von polymeren Fettsäuren können als oberflächenaktive Zusatzstoffe mitverwendet werden.

Als Schaumstabilisatoren kommen vor allem Polyethersiloxane, speziell wasserlösliche Vertreter, in Frage. Diese Verbindungen sind im allgemeinen so aufgebaut, daß ein Copolymerisat aus Ethylenoxid und Propylenoxid mit einem Polydimethylsiloxanrest verbunden ist. Derartige Schaumstabilisatoren sind z. B. in den US-A 2 834 748, 2 917 480 und 3 629 308 beschrieben.

Mitverwendet werden können auch Reaktionsverzögerer, z. B. sauer reagierende Stoffe wie Salzsäure oder organische Säurehalogenide, ferner Zellregler der an sich bekannten Art wie Paraffine oder Fettalkohole oder Dimethylpolysiloxane sowie Pigmente oder Farbstoffe und Flammschutzmittel der an sich bekannten Art, z.B. Tris-chlorethylphosphat, Trikresylphosphat oder Ammoniumphosphat und -polyphosphat, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß oder Schlämmkreide.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966, z.B. auf den Seiten 103 bis 113 beschrieben.

Durchführung des erfindungsgemäßen Verfahrens:

Die Reaktionskomponenten werden erfindungsgemäß nach dem an sich bekannten Einstufenverfahren, dem Prepolymerverfahren oder dem Semiprepolymerverfahren zur Umsetzung gebracht, wobei man sich oft maschineller Einrichtungen bedient, z.B. solcher, die in der US-A 2 764 565 beschrieben werden. Einzelheiten über Verarbeitungseinrichtungen, die auch erfindungsgemäß infrage kommen, werden im Kunstostoff-Handbuch, Band VII, herausgegeben von Vieweg und Höchtlen, Carl-Hanser-Verlag, München 1966, z.B. auf den Seiten 121 bis 205 beschrieben.

Bei der Schaumstoffherstellung kann erfindungsgemäß die Verschäumung auch in geschlossenen Formen durchgeführt werden. Dabei wird das Reaktionsgemisch in eine Form eingetragen. Als Formmaterial kommt Metall, z.B. Aluminium, oder Kunststoff, z.B. Epoxidharz, infrage. In der Form schäumt das schäumfähige Reaktionsgemisch auf und bildet den Formkörper. Die Formverschäumung kann dabei so durchgeführt werden, daß das Formteil an seiner Oberfläche Zellstrukter aufweist, sie kann aber auch so durchgeführt werden, daß das Formteil eine kompakte Haut und einen zelligen Kern aufweist. Erfindungsgemäß kann man in diesem Zusammenhang so vorgehen, daß man in die Form so viel schäumfähiges Reaktionsgemisch einträgt, daß der gebildete Schaumstoff die Form gerade ausfüllt. Man kann aber auch so arbeiten, daß man mehr schäumfähiges Reaktionsgemisch in die form einträgt, als zur Ausfüllung des Forminneren mit Schaumstoff notwendig ist. Im letztgenannten Fall wird somit unter "overcharging" gearbeitet; eine derartige Verfahrensweise ist z.B. aus den US-A 3 178 490 und 3 182 104 bekannt.

Bei der Formverschäumung werden vielfach an sich bekannte "äußere Trennmittel", wie Siliconöle, mitverwendet. Man kann aber auch sogenannte "innere Trennmittel", gegebenenfalls im Gemisch mit äußeren Trennmitteln, verwenden, wie sie z.B. aus den DE-A 2 121 670 und 2 307 589 bekanntgeworden sind.

Erfindungsgemäß lassen sich insbesondere kalthärtende Schaumstoffe herstellen (vgl. GB-B 1 162 517, DE-A 2 153 086).

Selbstverständlich können aber auch Schaumstoffe durch Blockverschäumung oder nach dem an sich bekannten Doppeltransportbandverfahren hergestellt werden.

Die nach der Erfindung erhältlichen Produkte finden z.B. folgende Anwendung:

Als Automobilsitze, Polstermaterialien, Matratzen, Dämmstoffe, Beschichtungen, gummielastische Materialien.

## Experimenteller Teil

A. Synthese der Aminvernetzer

A.1.

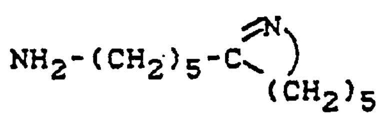

1.130 g ε-Caprolactam und 1.200 g CaO werden auf 500°C erhitzt, wobei das sich bildende Reaktionsprodukt abdestilliert. Anschließend wird mit 1.000 ml einer 20 %igen Natronlauge unter Rückfluß gekocht, abgekühlt und die obere Phase durch Destillation gereinigt.

Kp.:120 bis 123° C bei 3,5 mbar
Ausbeute:550 g, entsprechend 57 % der Theorie.

A.2.

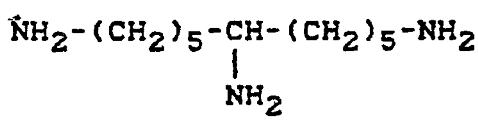

2,5 kg Vebindung A.1. werden mit 2 l flüssigem Ammoniak und 350 g Raney-Nickel bei 80°C und einem Wasserstoffdruck von 100 bar innerhalb von 24 Stunden hydriert. Man trennt nach Abkühlen von Katalysator, befreit vom Ammoniak und destilliert.

Ausbeute:2.530 g, entsprechend 91 % der Theorie
Kp.:L130° C bei 0,2 mbar
Reinheit:nach GC 99,9 %.

A.3.

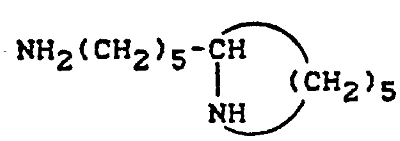

2,5 kg der Verbindung A.1. werden mit 200 g Raney-Nickel bei 70° C und einem Wasserstoffdruck von 180 bar innerhalb von 20 Stunden hydriert. Man trennt nach Abkühlen vom Katalysator und hydriert.

Ausbeute:2.320 g, entsprechend 92 % der Theorie
Kp.:90°C bei 0,1 mbar
Reinheit:nach GC 99,9 %.

A.4.

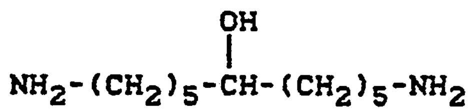

100 g der Verbindung A.1., 99 g Wasse und 51 g Ethanol werden in 150 g konz. KOH für 3 Stunden auf 180°C erhizt und in Gegenwart von 20 g Raney-Nickel bei einem Wasserstoffdruck von 90 bar hydriert. Es wird abgekühlt und destilliert.

Ausbeute:55 g, entsprechend 55 % der Theorie
Kp.:158°C bei 1,3 mbar.

A.5. Im Destillationsrückstand von Beispiel A.2. werden durch GC-MS-Kopplung weiter, höhere Amine identifiziert:

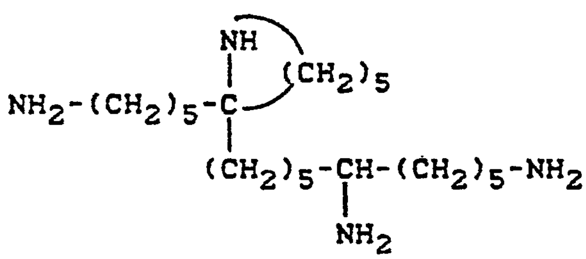

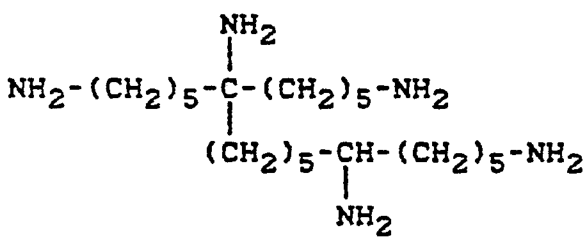

Unter anteiliger Verwendung dieser erfindungsgemäßen Vernetzer wurden Frei- und Formschaumstoffe nach bekannten Verfahren hergestellt und die mechanischen "Eigenschaften der Schaumstoffe ermittelt. Außerdem wurde durch Substitution von bekannten Aktivatoren, Vernetzern und Zellöffnern mit den erfindingsgemäßen Spezies Reaktionszeiten von Polyurethanreaktionsgemischen gemessen und damit ein Vergleich der Aktivität dieser Amine durchgeführt sowie ihre Zellöffnerwirkung anhand ausbleibender Schaumstoffkontraktion festgestellt.

Tabelle 1: Rezeptur

| Rezeptur/Bestandteile [Gew.-Teile] | I**) | II | IIA | III | IV | IVA | V**) | VA**) | VI | VII | VIII |
|---|---|---|---|---|---|---|---|---|---|---|---|
| trifunktioneller Polyether[1] OH-Zahl 28 | – | – | – | – | – | – | 90 | 90 | 90 | 90 | 90 |
| trifunktioneller Polyether[2] OH-Zahl 28 | 60 | 60 | 60 | 60 | 60 | 60 | – | – | – | – | – |
| hexafunktioneller Polyether[3] OH-Zahl 28 | 40 | 40 | 40 | 40 | 40 | 40 | 10 | 10 | 10 | 10 | 10 |
| Wasser | 2,8 | 2,8 | 2,8 | 2,8 | 2,8 | 2,8 | 3,1 | 3,1 | 3,1 | 3,1 | 3,1 |
| Katalysator[4] | 0,15 | 0,15 | 0,15 | 0,15 | 0,15 | 0,15 | 0,15 | 0,15 | 0,15 | 0,15 | 0,15 |
| Katalysator[5] | 0,3 | 0,3 | 0,3 | 0,3 | 0,3 | 0,3 | 0,3 | 0,3 | 0,3 | 0,3 | 0,3 |
| Katalysator[6] | 0,5 | 0,5 | 0,5 | 0,5 | 0,5 | 0,5 | 0,5 | 0,5 | 0,5 | 0,5 | 0,5 |
| Vernetzer 56[7] | 0,5 | – | – | – | – | – | 0,4 | 0,5 | – | – | – |
| Stabilisator KS 43[8] | 0,8 | 0,8 | 0,8 | 0,8 | 0,8 | 0,8 | 0,9 | 0,9 | 0,9 | 0,9 | 0,9 |
| Zellöffner 3170[9] | – | – | – | – | – | – | 1,0 | – | – | – | – |
| erfindungsgemäßes Amin A,2,1,6,11-Triaminoundecan | – | 0,2 | 0,4 | – | – | – | – | – | 0,2 | – | – |
| erfindungsgemäßes Amin A,3,2-(5'Aminopentyl)-azacycloheptan- | – | – | – | 0,2 | – | – | – | – | – | 0,2 | – |
| erfindungsgemäßes Amin A,4,1,11-Diamino-6-hydroxy-undecan | – | – | – | – | 0,2 | 0,4 | – | – | – | – | 0,3 |
| 70% TDI 65 + 30% rohes MDI | 36,9 | 36,2 | 36,5 | 36,0 | 36,1 | 36,3 | – | | – | – | – |
| 20% 2,4'-MDI + 65% 4,4'-MDI + 15% polymeres MDI bei einem NCO-Gehalt von 32,5% | – | – | – | – | – | – | 54,4 | 54,3*) | 53,4 | 53,2 | 53,4 |

*) der Verzicht auf den Zellöffner führt (bei diesem Vergleichsversuch) zu Schrumpf der Schaumstoffe

**) Vergleich

Tabelle 2

| Rezeptur | I**) | II | IIA | III | IV | IVA | V**) | VI | VII | VIII |
|---|---|---|---|---|---|---|---|---|---|---|
| Index | 100 | 100 | 100 | 100 | 100 | 100 | 100 | 100 | 100 | 100 |
| Liegezeit [s] | 5 | 5 | 5 | 6 | 5 | 5 | 6 | 6 | 6 | 6 |
| Abbindezeit [s] | 42 | 42 | 39 | 44 | 41 | 40 | 39 | 39 | 39 | 39 |
| Steigzeit [s] | 84 | 82 | 79 | 88 | 83 | 80 | 52 | 52 | 53 | 53 |

**) Vergleich
1) Polyether: Trimethylolpropan + 87% PO + 13% EO
2) Polyether: Trimethylolpropan + 87% PO + 13% EO
3) Polyether: Sorbit + 87% PO + 13% EO
4) Bis-dimethylaminoethylether
5) Triethylenamin, 33%ig in Dipropylenglykol
6) Bis-dimethylaminopropylformamid
7) Handelsprodukt der Bayer AG
8) Handelsprodukt der Bayer AG
9) Handelsprodukt der Bayer AG

| Rezeptur/Prüfungen am 20-l-Kastenformteil | I**) | II | III | IV | V**) | VI | VII | VIII |
|---|---|---|---|---|---|---|---|---|
| Rohdichte, DIN 52420 [kg/m³] | 40,0 | 39,6 | 40,2 | 40,3 | 44,4 | 43,2 | 43,1 | 43,7 |
| Stauchhärte, DIN 53577 $\varepsilon$ = 40% [kPa] | 2,05 | 2,67 | 2,59 | 2,48 | 3,03 | 3,87 | 3,96 | 3,85 |
| Zugfestigkeit, DIN 53571 [kPa] | 65 | 80 | 85 | 80 | 130 | 150 | 135 | 135 |
| Bruchdehnung, DIN 53571 [%] | 95 | 110 | 120 | 110 | 120 | 140 | 120 | 130 |
| Druckverformungsrest, DIN 53572 $\varepsilon$ = 50% [%] | 4,8 | 3,5 | 3,5 | 3,3 | 3,3 | 3,9 | 3,6 | 3,9 |
| Druckverformungsrest, DIN 53572 $\varepsilon$ = 75% [%] | 6,1 | 4,5 | 4,5 | 4,4 | 4,7 | 5,3 | 5,2 | 4,9 |

**) Vergleich

Tauscht man die in der Tabelle 1 aufgeführten Amine 1 bis 4 gegen Diamine wie 1,6-Hexamethylendiamin oder 1,12-Diaminododecan aus, so resultiert ein Schaumstoffkollaps.

Aus Tabelle 3 geht hervor, daß die erfindungsgemäßen Di- und Triaminoalkane bzw. Diaminocycloalkane bei vergleichbaren Rohdichten (in den Beispielen II bis IV sowie VI bis VIII) die mechanischen Eigenschaften wir die Stauchhärte, die Zugfestigkeit und die Bruchdehnung deutlich verbessern.

Besonders ausgeprägt ist dieses Verhalten in den Beispielen III und VI mit 2-(5'-Aminopentyl)-azacycloheptan (A.3.).

Die zellöffnende Wirkung der erfindungsgemäßen Amine wird in den Beispielen VI bis VIII in Tabelle 1 gezeigt, wobei trotz des Verzichts auf einen Zellöffner nichtschrumpfende, offene Schaumstoffe erhalten werden, während dieser bei Alkylenpolyaminen unbedingt erforderlich ist (Beispiel VA).

Tabelle 2 zeigt, daß eine aktivierende Wirkung in verkürzten Liege- und Abbindezeiten resultiert (Beispiele IIA und IVA).

Bei der maschinellen Verschäumung der Rohstoffmischungen zeigten die frisch entformten, noch warmen Formteile im Falle der Beispiele II bis IV und V bis VIII im Vergleich zum Stand der Technik einen erheblich reduzierten Amingeruch. Dies ist vor allen Dingen in bezug auf die Arbeitshygiene von enormer Bedeutung.

**Patentansprüche**

1. Verfahren zur Herstellung von Polyurethan(harnstoff)-Schaumstoffen durch Umsetzung von Polyisocyanaten mit organischen Verbindungen vom Molekulargewicht 400 bis 10.000, welche mindestens zwei gegenüber Isocyanaten reaktionsfähige Wasserstoffatome enthalten, und mit Amin-Vernetzern in Gegenwart von Wasser und/oder organischen Treibmitteln, gegebenenfalls unter Mitverwendung von Katalysatoren, weiteren Hilfs- und Zusatzstoffen und weitern Kettenverlängerungsmitteln vom Molekulargewicht 32 bis 399, dadurch gekennzeichnet, daß als Amin-Vernetzer di-oder höherfunktionelle Amine der allgemeinen Formeln (I) und/oder (II)

I) Offenkettige Amine:

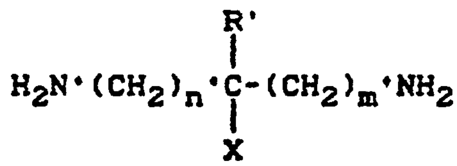

(I)

II) cyclische Amine:

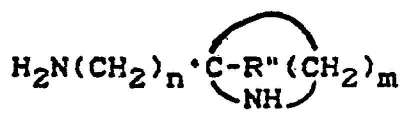

(II),

wobei

n und m jeweils unabhängig voneinander ganze Zahlen von 2 bis 10, bevorzugt 3 bis 8, insbesondere 5,

X $-OH$, $-NH_2$ oder $-(CH_2)_m \cdot NH_2$

R' $-H$, $-C_1$-$C_5$-Alkyl (bevorzugt Methyl) oder

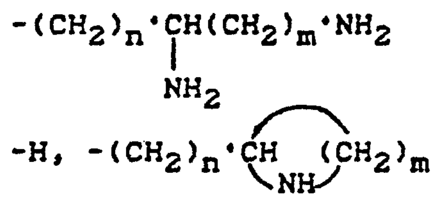

R'' -H, oder

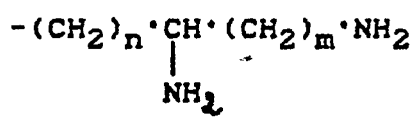

bedeutet, in Mengen von 0,01 bis 5,0 Gew.-Teilen, besonders bevorzugt 0,05 bis 0,6 Gew.-Teilen, bezogen auf 100 Gew.-Teile der Verbindungen vom Molekulargewicht 400-10 000, verwendet werden.

2. Verfahren nach Anspruch 1, dadurch gekennzeichnet, daß

R' und R'' gleich Wasserstoff
Xgleich $NH_2$ oder OH, vorzugsweise $NH_2$
n, mjeweils gleiche oder verschiedene Zahlen von 3 bis 8, bevorzugt von 4 bis 6 und insbesondere gleich 5

bedeuten.

3. Verfahren nach Ansprüchen 1 und 2, dadurch gekennzeichnet, daß als Polyisocyanate solche verwendet werden, die durch Anilin-Formaldehyd-Kondensation und nachfolgende Phosgenierung hergestellt worden sind.

4. Verfahren nach Ansprüchen 1 und 2, dadurch gekennzeichnet, daß als Polyisocyanate Gemische aus phosgenierten Anilin-Formaldehyd-Kondensaten und Isomerengemischen der 2,4- und 2,6-Toluylendiisocyanate verwendet werden.

5. Verfahren nach Ansprüchen 1 und 2, dadurch gekennzeichnet, daß als Polyisocyanate Isomerengemische aus 2,4- und 2,6-Toluylendiisocyanat verwendet werden.

6. Verfahren nach Anspruch 1 und 3 bis 5, dadurch gekennzeichnet, daß als Amin-Vernetzer

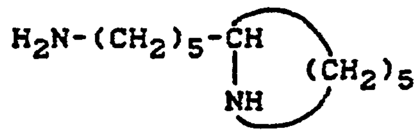

verwendet wird.

7. Verfahren nach Ansprüchen 1 bis 5, dadurch gekennzeichnet, daß als Amin-Vernetzer

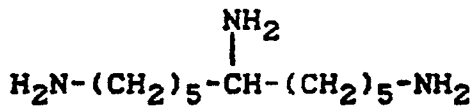

verwendet wird.

8. Verfahren nach Ansprüchen 1 bis 5, dadurch gekennzeichnet, daß als Amin-Vernetzer

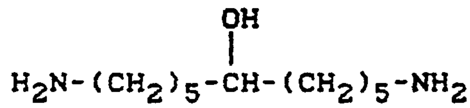

verwendet wird.

9. Verfahren nach Ansprüchen 1 und 8, dadurch gekennzeichnet, daß die Schaumstoffherstellung in Abwesenheit von üblichen Zellöffnern erfolgt.

10. Überwiegend offenzellige Polyurethan(harnstoff)-Schaumstoffe, erhältlich nach Ansprüchen 1 bis 9.

**Claims**

1. A process for the production of polyurethane (urea) foams by reaction of polyisocyanates with organic compounds having a molecular weight of from 400 to 10,000 and containing at least two isocyanate-reactive hydrogen atoms and with amine crosslinkers in the presence of water and/or organic blowing agents, optionally using catalysts, other auxiliaries and additives and other chain-extending agents having a molecular weight of 32 to 399, characterized in that difunctional or higher amines corresponding to general formulae (I) and/or (II)

I) Open-chain amines:

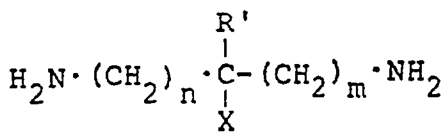

(I)

II) Cyclic amines:

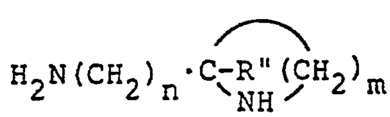

(II)

in which n and m independently of one another are integers of from 2 to 10, preferably from 3 to 8 and more preferably 5,

X represents $-OH$, $-NH_2$ or $-(CH_2)_m \cdot NH_2$

R' represents $-H$, $-C_1-C_5$-alkyl (preferably methyl) or

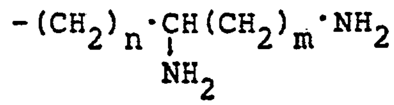

R" represents $-H$, 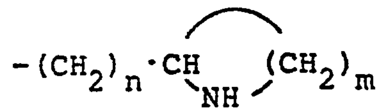 or

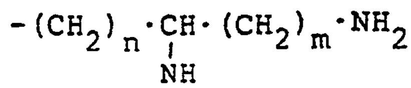

are used as the amine crosslinkers in quantities of from 0.01 to 5.0 parts by weight and preferably in quantities of from 0.05 to 0.6 part by weight, based on 100 parts by weight of the compounds having a molecular weight of 400 to 10,000.

2. A process as claimed in claim 1, characterized in that R' and R" are hydrogen,
X represents $NH_2$ or OH, preferably $NH_2$ and
n and m may be the same or different and assume values of from 3 to 8, preferably from 4 to 6 and more especially 5.

3. A process as claimed in claims 1 and 2, characterized in that the polyisocynates used are those obtained by phosgenation of aniline-formaldehyde condensates.

4. A process as claimed in claims 1 and 2, characterized in that the polyisocyanates used are mixtures of phosgenated aniline-formaldehyde condensates and isomer mixtures of 2,4- and 2,6-tolylene diisocyanates.

5. A process as claimed in claims 1 and 2, characterized in that the polyisocyanates used are isomer mixtures of 2,4- and 2,6-tolylene diisocyanate.

6. A process as claimed in claims 1 and 3 to 5, characterized in that

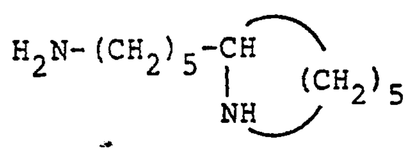

is used as the amine crosslinker.

7. A process as claimed in claims 1 to 5, characterized in that

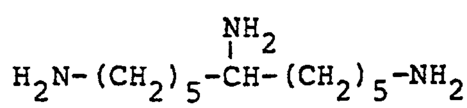

is used as the amine crosslinker.

8. A process as claimed n claims 1 to 8, characterized in that

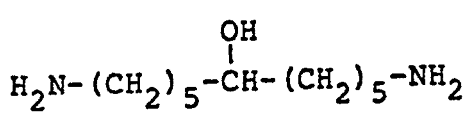

is used as the amine crosslinker.

9. A process as claimed in claims 1 and 8, characterized in that production of the foams is carried out in the absence of standard cell openers.

10. Predominantly open-cell polyurethane (urea) foams obtainable by the process claimed in claims 1 to 9.

## Revendications

1. Procédé de préparation de mousses de polyuréthane(urée) par réaction de polyisocyanates avec des composés organiques d'un poids moléculaire de 400 à 10.000, contenant au moins deux atomes d'hydrogène réactifs vis-à-vis des isocyanates, ainsi qu'avec des agents de réticulation aminés en présence d'eau et/ou d'agents moussants organiques en utilisant éventuellement conjointement des catalyseurs d'àutres additifs et substances auxiliaires tels que d'autres agents d'allongement de chaîne d'un poids moléculaire de 32 à 399, caractérisé en ce que, comme agents de récticulation aminés, on utilise des amines difonctionelles ou d'une fonctionnalité supérieure répondant aux formules générales (I) et/ou (II):
**I) Amines à chaîne ouverte:**

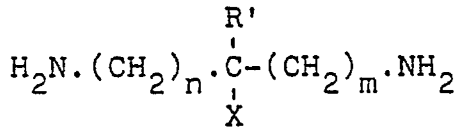

(I)

II) amines cycliques :

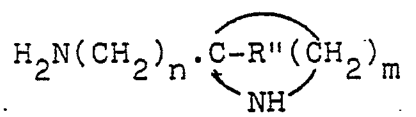

(II)

où n et m représentant chacun indépendamment l'un de l'autre des nombres entiers de 2 à 10, de préférence, de 3 à 8, en particulier, 5,
X représente -OH, $-NH_2$ ou $-(CH_2)_m$. $NH_2$,
R' représente -H,un groupe alkyle en $C_1$-$C_5$ (de préférence, un groupe méthyle) ou un groupe

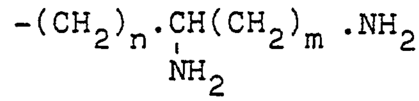

R'' représente -H, un groupe 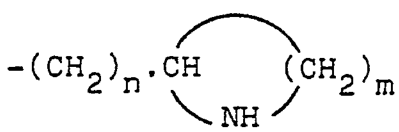

ou un groupe 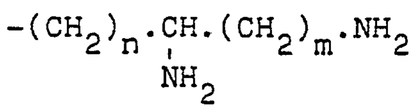

en quantités de 0,01 à 5,0 parties en poids, de manière particulièrement préférée, de 0,05 à 0,6 partie en poids, calculé sur 100 parties en poids des composés d'un poids moléculaire de 400 à 10.000.

2. Procédé selon la revendication 1, caractérisé en ce que R' et R" représentant chacun un atome d'hydrogène,
X représente $NH_2$ ou OH, de préférence, $NH_2$ n, m représentent chacun des nombres identiques ou différents de 3 à 8, de préférence, de 4 à 6 et, en particulier, 5.

3. Procédé selon les revendications 1 et 2, caractérisé en ce que, comme polyisocyanates, on utilise ceux que l'on a préparés par condensation d'aniline/formaldéhyde et par phosgénation ultérieure.

4. Procédé selon les revendications 1 et 2, caractérisé en ce que, comme polyisocyanates, on utilise des mélanges de condensats phosgénés d'aniline/formaldéhyde, ainsi que des mélanges d'isomères des 2,4- et 2,6-toluylène-diisocyanates.

5. Procédé selon les revendications 1 et 2, caractérisé en ce que, comme polyisocyanates, on utilise des mélanges d'isomères, des 2,4- et 2,6-toluylène-diisocyanates.

6. Procédé selon les revendications 1 et 3 à 5, caractérisé en ce que, comme agent de réticulation aminé, on utilise:

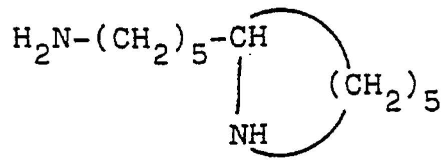

7. Procédé selon les revendications 1 à 5, caractérisé en ce que, comme agent de réticulation aminé, on utilise:

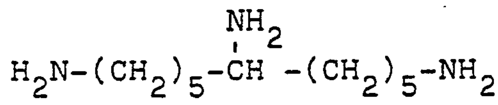

8. Procédé selon les revendications 1 à 5, caractérisé en ce que, comme agent de réticulation aminé, on utilise:

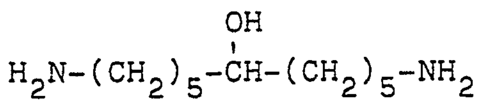

9. Procédé selon les revendications 1 à 8, caractérisé en ce que la préparation de mousse a lieu en absence d'agents habituels d'ouverture de cellules.

10. Mousses de polyuréthane(urée) principalement à cellules ouvertes, que l'on obtient selon les revendications 1 à 9.